# EUROPEAN PATENT APPLICATION

(11) **EP 4 482 071 A1**
(43) Date of publication of application: **25.12.2024**
(21) Application number: 22926501.2
(22) Date of filing: 18.02.2022
(51) Int. Cl.: H04L 5/00, H04W 72/00

(54) **COMMUNICATION METHOD AND APPARATUS, DEVICE AND READABLE STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/076969
(87) International publication number: WO 2023/155174

(57) **Abstract**

The present disclosure provides a communication method and apparatus, a device and a readable storage medium. The method comprises: receiving first control information carried by a physical downlink control channel (PDCCH) on a first control resource set (CORESET), the first control information comprising an indication domain (S201), and the indication domain being used for indicating a first transmission configuration indication (TCI) state and/or a first quasi co-location (QCL); determining at least one channel and/or at least one signal applicable to the first TCI state (S202); and/or determining at least one channel and/or at least one signal applicable to the first QCL (S203). By determining the application conditions corresponding to each channel and each signal corresponding to the first TCI state and/or the first QCL indicated by the indication domain, the signaling overhead in the TCI state indication process is reduced, and the beam transmission performance can be improved.

## Description

### TECHNICAL FIELD

The present disclosure relates to the field of communication, and particularly to a communication method, a communication apparatus, a communication device, and a readable storage medium.

### BACKGROUND

In New Radio (NR), when a communication frequency band is located at a Frequency Range (FR) 2, due to a rapid attenuation of a high-frequency channel, beam-based transmission and reception are required to ensure the coverage.

In the related art, both a physical downlink control channel (PDCCH) and a physical uplink control channel (PUCCH) use a medium access control element (MAC CE) to activate their respective beams, while a physical downlink shared channel (PDSCH) and a physical uplink shared channel (PUSCH) indicate their respective beams through downlink control information (DCI) for beam transmission.

However, according to the above method, due to a fact that the beams corresponding to each channel are independently indicated, this leads to a problem that a configuration signaling overhead for indicating the beams during a beam indication process is too high, and a beam transmission efficiency is relatively low.

### SUMMARY

Embodiments of the present disclosure provides a communication method, a communication apparatus, a communication device, and a readable storage medium that may reduce a signaling overhead and improve a beam transmission efficiency. The technical solution is as follows.

According to a aspect of the present disclosure, a communication method is provided, which is performed by a terminal device. The communication method includes: receiving first control information carried in a physical downlink control channel (PDCCH) on a first control resource set (CORESET), in which the first control information includes an indication field for indicating a first transmission configuration indication (TCI) state and/or a first quasi co location (QCL); and determining at least one channel and/or at least one signal applicable to the first TCI state indicated by the indication field; and/or, determining at least one channel and/or at least one signal applicable to the first QCL indicated by the indication field.

In an optional embodiment, the at least one channel includes a first PDCCH corresponding to a second CORESET.

In an optional embodiment, the second CORESET includes a user equipment (UE) specific search space set (USS set) and/or a common search space set type 3 (CSS set Type 3); the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the method further includes: receiving, by the terminal, a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the method further includes: receiving a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET index as the second CORESET; and a TCI state of the first PDCCH is different from the first TCI state; and/or, a QCL of the first PDCCH is different from the first QCL.

In an optional embodiment, the method further includes: receiving, by the terminal, a configuration signaling for configuring the second CORESET not to use a specific TCI state.

In an optional embodiment, the method further includes: failing, by the terminal, to receive a configuration signaling for determining whether the second CORESET uses a specific TCI state.

In an optional embodiment, the method further includes: receiving a second TCI state and/or a second QCL activated by a media access control unit (MAC CE) for the second CORESET; in which, a TCI state of the first PDCCH is the same as the second TCI state; and/or, a QCL of the first PDCCH is the same as the second QCL.

In an optional embodiment, the at least one channel includes a second PDCCH, the second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET set pool index as the third CORESET; a TCI state of the second PDCCH is the same as the first TCI state; and/or, a QCL of the second PDCCH is the same as the first QCL.

In an optional embodiment, the method further includes: receiving a configuration signaling for configuring the third CORESET and/or the first SS set to use a specific TCI state.

In an optional embodiment, the first SS set includes any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the method further includes: receiving, by the terminal, a configuration signaling for configuring the third CORESET and/or the first SS set not to use a specific TCI state.

In an optional embodiment, the method further includes: failing, by the terminal, to receive a configuration signaling for determining whether the third CORESET and/or the first SS set uses a specific TCI state.

In an optional embodiment, the method further includes: receiving a third TCI state activated by the MAC CE for the third CORESET and/or the first SS set; and/or, receiving a third QCL activated by the MAC CE for the third CORESET and/or the first SS set; and determining that a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with a CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a physical downlink shared channel (PDSCH), a physical uplink control channel (PUCCH), and a physical uplink shared channel (PUSCH).

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the method further includes: receiving configuration information for radio resource control (RRC) and/or MAC CE, in which the configuration information for RRC and/or MAC CE indicates whether the at least one channel uses a specific TCI state; in which, the at least one channel is not scheduled by a downlink control information (DCI) signaling.

In an optional embodiment, the configuration information for RRC and/or MAC CE indicates that the at least one channel uses the specific TCI state; and a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; and a TCI state of the at least one channel is different from the first TCI state; and/or, a QCL of the at least one channel is different from the first QCL.

In an optional embodiment, the method further includes: receiving a fourth TCI state and/or a fourth QCL configured for the at least one channel by the RRC and/or MAC CE; in which, a TCI state of the at least one channel is the same as the fourth TCI state; and/or, a QCL of the at least one channel is the same as the fourth QCL.

In an optional embodiment, the at least one signal includes at least one of a channel state information reference signal (CSI-RS) and a sounding reference signal (SRS).

In an optional embodiment, a TCI state of a SS set and/or CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; and a TCI state of the at least one signal is the same as the first TCI state; and/or, a QCL of the at least one signal is the same as the first QCL.

In an optional embodiment, the method further includes: receiving configuration information for RRC and/or MAC CE, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the method further includes: receiving a fifth TCI state and/or a fifth QCL configured for the at least one signal by the RRC and/or MAC CE; in which, a TCI state of the at least one signal is the same as the fifth TCI state; and/or, a QCL of the at least one signal is the same as the fifth QCL.

In another aspect, a communication method is provided, which is performed by an access network device. The communication method includes: sending first control information carried in a PDCCH to a terminal through a first CORESET, in which the first control information includes an indication field, the indication field indicates a first TCI state and/or a first QCL; and in which the indication field indicates at least one channel and/or at least one signal applicable to the first TCI state; and/or, the indication field indicates at least one channel and/or at least one signal applicable to the first QCL.

In an optional embodiment, the at least one channel includes a first PDCCH corresponding to a second CORESET.

In an optional embodiment, the second CORESET includes a USS set and/or a CSS set Type 3; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the method further includes: sending a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the method further includes: sending a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is different from the first TCI state; and/or, a QCL of the first PDCCH is different from the first QCL.

In an optional embodiment, the method further includes: sending a configuration signaling to the terminal, in which the configuration signaling configures the second CORESET not to use a specific TCI state.

In an optional embodiment, the access network device does not send a configuration signaling to the terminal, in which the configuration signaling is configured to determine whether the second CORESET uses a specific TCI state.

In an optional embodiment, the method further includes: sending a MAC CE to the terminal, in which the MAC CE is configured to activate a second TCI state and/or a second QCL for the second CORESET; in which, a TCI state of the first PDCCH is the same as the second TCI state; and/or, a QCL of the first PDCCH is the same as the second QCL.

In an optional embodiment, the at least one channel includes a second PDCCH, the second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the method further includes: sending a configuration signaling to the terminal, in which the configuration signaling configures the third CORESET and/or the first SS set to use a specific TCI state.

In an optional embodiment, the first SS set includes any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the method further includes: sending a configuration signaling to the terminal, in which the configuration signaling configures the third CORESET and/or the first SS set not to use a specific TCI state.

In an optional embodiment, the access network device does not send a configuration signaling to the terminal, in which the configuration signaling is configured to determine whether the third CORESET and/or the first SS set uses a specific TCI state.

In an optional embodiment, the method further includes: sending a MAC CE to the terminal, in which the MAC CE is configured to activate a third TCI state for the third CORESET and/or the first SS set; and/or, sending a MAC CE to the terminal, in which the MAC CE is configured to activate a third QCL for the third CORESET and/or the first SS set; and a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with a CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a PDSCH, a PUCCH, and a PUSCH.

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the method further includes: sending configuration information for RRC and/or MAC CE to the terminal, in which the configuration information for RRC and/or MAC CE indicates whether the at least one channel uses a specific TCI state; in which, the at least one channel is not scheduled by a DCI signaling.

In an optional embodiment, the configuration information for RRC and/or MAC CE indicates that the at least one channel uses the specific TCI state; a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; a TCI state of the at least one channel is different from the first TCI state; and/or, a QCL of the at least one channel is different from the first QCL.

In an optional embodiment, the method further includes: sending the RRC and/or MAC CE to the terminal, in which the RRC and/or MAC CE configures a fourth TCI state and/or a fourth QCL for the at least one channel; in which, a TCI state of the at least one channel is the same as the fourth TCI state; and/or, a QCL of the at least one channel is the same as the fourth QCL.

In an optional embodiment, the at least one signal includes at least one of a CSI-RS and a SRS.

In an optional embodiment, a TCI state of a SS set and/or a CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; a TCI state of the at least one signal is the same as the first TCI state; and/or, a QCL of the at least one signal is the same as the first QCL.

In an optional embodiment, the method further includes: sending configuration information for RRC and/or MAC CE to the terminal, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the method further includes: sending the RRC and/or MAC CE to the terminal, in which the RRC and/or MAC CE configures a fifth TCI state and/or a fifth QCL for the at least one signal; and a TCI state of the at least one signal is the same as the fifth TCI state; and/or, a QCL of the at least one signal is the same as the fifth QCL.

In another aspect, a communication apparatus is provided, which includes: a receiving module, configured to receive first control information carried in a PDCCH on a first CORESET, in which the first control information includes an indication field for indicating a first TCI state and/or a first QCL; and a determination module, configured to determine at least one channel and/or at least one signal applicable to the first TCI state indicated by the indication field; and/or, determine at least one channel and/or at least one signal applicable to the first QCL indicated by the indication field.

In an optional embodiment, the at least one channel includes a first PDCCH corresponding to a second CORESET.

In an optional embodiment, the second CORESET includes a USS set and/or a CSS set Type 3; and the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; and the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the receiving module is further configured to receive a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the receiving module is further configured to receive a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is different from the first TCI state; and/or, a QCL of the first PDCCH is different from the first QCL.

In an optional embodiment, the receiving module is further configured to receive a configuration signaling for configuring the second CORESET not to use a specific TCI state.

In an optional embodiment, the terminal does not receive a configuration signaling for determining whether the second CORESET uses a specific TCI state.

In an optional embodiment, the receiving module is further configured to receive a second TCI state and/or a second QCL activated by a MAC CE for the second CORESET; in which, a TCI state of the first PDCCH is the same as the second TCI state; and/or, a QCL of the first PDCCH is the same as the second QCL.

In an optional embodiment, the at least one channel includes a second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET pool index as the third CORESET; a TCI state of the second PDCCH is the same as the first TCI state; and/or, a QCL of the second PDCCH is the same as the first QCL.

In an optional embodiment, the receiving module is further configured to receive a configuration signaling for configuring the third CORESET and/or the first SS set to use a specific TCI state.

In an optional embodiment, the first SS set includes any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the receiving module is further configured to receive a configuration signaling for configuring the third CORESET and/or the first SS set not to use a specific TCI state.

In an optional embodiment, the terminal does not receive a configuration signaling for determining whether the third CORESET and/or the first SS set uses a specific TCI state.

In an optional embodiment, the receiving module is further configured to receive a third TCI state activated by the MAC CE for the third CORESET and/or the first SS set; and/or, receive a third QCL activated by the MAC CE for the third CORESET and/or the first SS set; and determine that a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with a CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a PDSCH, a PUCCH, and a PUSCH.

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the receiving module is further configured to receive configuration information for RRC and/or MAC CE, in which the configuration information for RRC and/or MAC CE indicates whether the at least one channel uses a specific TCI state; in which, the at least one channel is not scheduled by a DCI signaling.

In an optional embodiment, the configuration information for RRC and/or MAC CE indicates that the at least one channel uses the specific TCI state; and a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; and a TCI state of the at least one channel is different from the first TCI state; and/or, a QCL of the at least one channel is different from the first QCL.

In an optional embodiment, the receiving module is further configured to receive a fourth TCI state and/or a fourth QCL configured for the at least one channel by the RRC and/or MAC CE; in which, a TCI state of the at least one channel is the same as the fourth TCI state; and/or, a QCL of the at least one channel is the same as the fourth QCL.

In an optional embodiment, the at least one signal includes at least one of a CSI-RS and a SRS.

In an optional embodiment, a TCI state of a SS set and/or a CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; and a TCI state of the at least one signal is the same as the first TCI state; and/or, a QCL of the at least one signal is the same as the first QCL.

In an optional embodiment, the receiving module is further configured to receive configuration information for RRC and/or MAC CE, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the receiving module is further configured to receive a fifth TCI state and/or a fifth QCL configured for the at least one signal by the RRC and/or MAC CE; in which, a TCI state of the at least one signal is the same as the fifth TCI state; and/or, a QCL of the at least one signal is the same as the fifth QCL.

In another aspect, a communication apparatus is provided, which includes: a sending module, configured to send first control information carried in a PDCCH to a terminal through a first CORESET, in which the first control information includes an indication field for indicating a first TCI state and/or a first QCL; and in which the indication field indicates at least one channel and/or at least one signal applicable to the first TCI state; and/or, the indication field indicates at least one channel and/or at least one signal applicable to the first QCL.

In an optional embodiment, the at least one channel includes a first PDCCH corresponding to a second CORESET.

In an optional embodiment, the second CORESET includes a USS set and/or a CSS set Type 3; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the sending module is further configured to send a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the sending module is further configured to send a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is different from the first TCI state; and/or, a QCL of the first PDCCH is different from the first QCL.

In an optional embodiment, the sending module is further configured to send a configuration signaling to the terminal, in which the configuration signaling configures the second CORESET not to use a specific TCI state.

In an optional embodiment, the access network device does not send a configuration signaling to the terminal, in which the configuration signaling is configured to determine whether the second CORESET uses a specific TCI state.

In an optional embodiment, the sending module is further configured to send a MAC CE to the terminal, in which the MAC CE is configured to activate a second TCI state and/or a second QCL for the second CORESET; in which, a TCI state of the first PDCCH is the same as the second TCI state; and/or, a QCL of the first PDCCH is the same as the second QCL.

In an optional embodiment, the at least one channel includes a second PDCCH, the second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the sending module is further configured to send a configuration signaling to the terminal, in which the configuration signaling configures the third CORESET and/or the first SS set to use a specific TCI state.

In an optional embodiment, the first SS set includes any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the sending module is further configured to send a configuration signaling to the terminal, in which the configuration signaling configures the third CORESET and/or the first SS set not to use a specific TCI state.

In an optional embodiment, the access network device does not send a configuration signaling to the terminal, in which the configuration signaling is configured to determine whether the third CORESET and/or the first SS set uses a specific TCI state.

In an optional embodiment, the sending module is further configured to send a MAC CE to the terminal, in which the MAC CE is configured to activate a third TCI state for the third CORESET and/or the first SS set; and/or, send a MAC CE to the terminal, in which the MAC CE is configured to activate a third QCL for the third CORESET and/or the first SS set; and in which a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with a CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a PDSCH, a PUCCH, and a PUSCH.

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the sending module is further configured to send configuration information for RRC and/or MAC CE to the terminal, in which the configuration information for RRC and/or MAC CE indicates whether the at least one channel uses a specific TCI state; in which, the at least one channel is not scheduled by a DCI signaling.

In an optional embodiment, the configuration information for RRC and/or MAC CE indicates that the at least one channel uses the specific TCI state; and a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; and a TCI state of the at least one channel is different from the first TCI state; and/or, a QCL of the at least one channel is different from the first QCL.

In an optional embodiment, the sending module is further configured to send the RRC and/or MAC CE to the terminal, in which the RRC and/or MAC CE configures a fourth TCI state and/or a fourth QCL for the at least one channel; in which, a TCI state of the at least one channel is the same as the fourth TCI state; and/or, a QCL of the at least one channel is the same as the fourth QCL.

In an optional embodiment, the at least one signal includes at least one of a CSI-RS and a SRS.

In an optional embodiment, a TCI state of a SS set and/or a CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; a TCI state of the at least one signal is the same as the first TCI state; and/or, a QCL of the at least one signal is the same as the first QCL.

In an optional embodiment, the sending module is further configured to send configuration information for RRC and/or MAC CE to the terminal, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the sending module is further configured to send the RRC and/or MAC CE to the terminal, in which the RRC and/or MAC CE configures a fifth TCI state and/or a fifth QCL for the at least one signal; and a TCI state of the at least one signal is the same as the fifth TCI state; and/or, a QCL of the at least one signal is the same as the fifth QCL.

In another aspect, a terminal device is provided, which includes: a processor; and a transceiver connected to the processor. The processor is configured to load and execute an executable instruction to implement the communication method according to the embodiments of the first aspect of the present disclosure.

In another aspect, an access network device is provided, which includes: a processor; and a transceiver connected to the processor. The processor is configured to load and execute an executable instruction to implement the communication method according to the embodiments of the second aspect of the present disclosure.

In another aspect, a computer-readable storage medium is provided, which stores at least one instruction, and at least one program, code set, or instruction set. The at least one instruction, and at least one program, code set, or instruction set is loaded and executed by a processor to implement the communication method as described in the disclosed embodiments.

Beneficial effects brought by the technical solution according to the embodiments of the present disclosure include at least that:

the PDCCH on the first CORESET carries the first control information including the indication field, and the applicable situations corresponding to each channel and each signal are determined by the first TCI state and/or the first QCL indicated by the indication field, which thus reduces a signal overhead during an indication process of the TCI state and improves a beam transmission performance.

### BRIEF DESCRIPTION OF THE DRAWINGS

In order to provide a clearer explanation of the technical solution in the embodiments of the present disclosure, a brief introduction may be given to accompanying drawings required for the description of the embodiments. It is obvious that the accompanying drawings described below are only some embodiments of the present disclosure. For those skilled in the art, other drawings may be obtained based on these drawings without creative works.
FIG 1 is a block diagram of a communication system according to an example embodiment of the present disclosure.
FIG 2 is a flow chart of a communication method according to an example embodiment of the present disclosure.
FIG 3 is a flow chart of a communication method according to another example embodiment of the present disclosure.
FIG 4 is a flow chart of a communication method according to another example embodiment of the present disclosure.
FIG 5 is a structural block diagram of a communication apparatus according to an example embodiment of the present disclosure.
FIG 6 is a structural block diagram of a communication apparatus according to anther example embodiment of the present disclosure.
FIG 7 is a structural block diagram illustrating a communication device according to an example embodiment of the present disclosure.

### DETAILED DESCRIPTION

In order to clarify the purpose, the technical solution, and advantages of the present disclosure, a detailed description of the embodiments of the present disclosure will be further provided below in conjunction with the accompanying drawings.

The embodiments of the disclosure will be described in detail below, and examples of the embodiments are shown in accompanying drawings. In the description with reference to the drawings, unless otherwise indicated, the same numbers in different drawings indicate the same or similar elements. The example embodiments described below do not represent all implementations consistent with the disclosure. Instead, they are only examples of apparatuses and methods consistent with some aspects of the disclosure as detailed in the attached claims.

Terms used in the embodiments of the disclosure are solely for a purpose of describing specific embodiments and are not intended to limit the embodiments of the disclosure. The singular forms "alan", "the" and "said" used in the embodiments of the disclosure and attached claims are also intended to include plural forms, unless clearly indicated otherwise in the context. It may be understood that the term "and/or" used in the disclosure refers to and includes any or all possible combinations of one or more related listed items.

It may be understood that although various information may be described using terms such as first, second, third, etc. in embodiments of the disclosure, such information should not be limited to these terms. These terms are only used to distinguish information of the same type from each other. For example, without departing from the scope of embodiments of the disclosure, first information may also be referred to as second information, and similarly, second information may also be referred to as first information. Depending on the context, words "if' used here may be interpreted as "when" or "while" or "in response to determining".

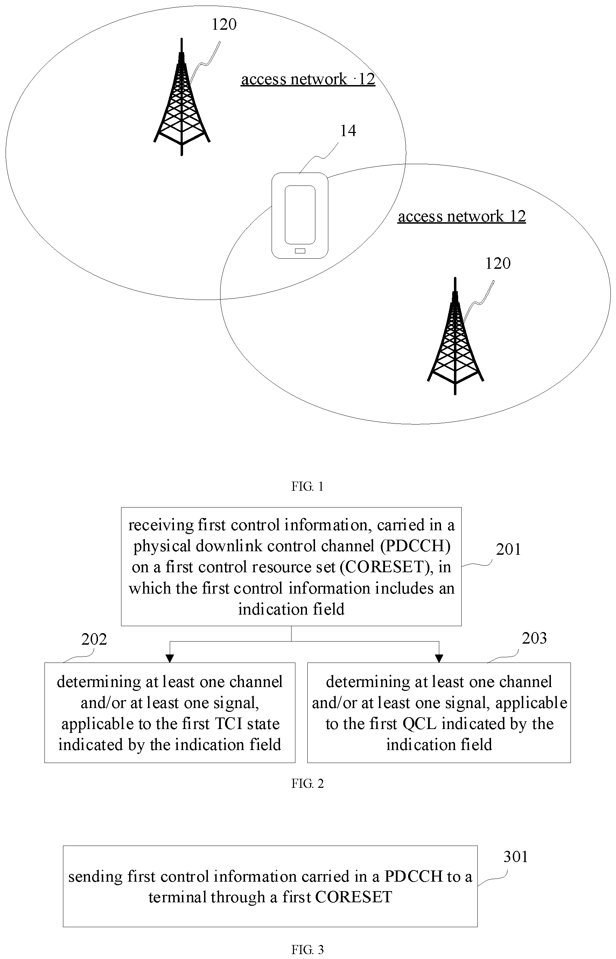

FIG 1 shows a block diagram of a communication system according to an embodiment of the present disclosure. The communication system may include an access network 12 and a terminal device 14.

The access network 12 includes several access network devices 120. The access network device 120 may be a base station, and the base station is a device deployed in the access network to provide a wireless communication function for the terminal device. The base station may include various forms of macro base stations, micro base stations, relay stations, access points, and so on. In systems using different radio access technologies, names of devices with a base station function may vary. For example, in a LTE system, the device is referred to as eNodeB or eNB. In a 5G NR-U system, the device is referred to as gNodeB or gNB. With an evolution of the communication technology, a description of "base station" may change. For a convenience of description in the embodiments of the present disclosure, the device that provides the wireless communication function for the terminal device 14 is collectively referred to as an access network device. A connection between the access network device 120 and the terminal device 14 may be established through a radio interface, allowing for communication between the access network device 120 and the terminal device 14, including an interaction of signaling and data, through the connection. There may be a plurality of access network devices 120, and two adjacent access network devices 120 may also communicate with each other through a wired or wireless way. The terminal device 14 may perform switching between different access network devices 120, that is, establish different connections with different access network devices.

The terminal device 14 may include various handheld devices, on-vehicle devices, wearable devices, computing devices, or other processing devices connected to a wireless modem, with the wireless communication function, as well as various forms of user devices, mobile stations (MS), terminal devices, and so on. For ease of description, the devices mentioned above are collectively referred to as a terminal device. The access network device 120 and the terminal device 14 communicate with each other through some kind of radio interface technology, such as an Uu interface.

The technical solution of the embodiments of the present disclosure may be applied to various communication systems, such as a global system of mobile communication (GSM) system, a code division multiple access (CDMA) system, a wideband code division multiple access (WCDMA) system, a unified packet radio service (GPRS), a long term evolution (LTE) system, a LTE frequency division duplex (FDD) system, a LTE time division duplex (TDD) system, an advanced long term evolution (LTE-A) system, a new radio (NR) system, and a NR system evolution system, a LTE-based access to unlicensed spectrum (LTE-U), a NR-U system, a unified mobile telecommunication system (UMTS), a worldwide interoperability for microwave access (WiMAX) communication system, a wireless local area networks (WLAN), a wireless fidelity (WiFi) , a next-generation communication system, or other communication systems.

In general, a conventional communication system supports a limited number of connections and is easy to implement. However, with the development of the communication technology, a mobile communication system will not only support a conventional communication, but also support such as a device to device (D2D) communication, a machine to machine (M2M) communication, a machine type communication (MTC), a vehicle to vehicle (V2V) communication, and a vehicle to everything (V2X) system. The embodiments of the present disclosure may also be applied to these communication systems.

In a NR, especially in case that a communication frequency band is in FR2, due to a rapid attenuation of a high-frequency channel, transmission and reception based on a transmission configuration indication (TCI) state or Spatial Relation Info are required to ensure the coverage.

In Rel-16, the TCI state or the Spatial Relation Info for a PDCCH, a PDSCH, a PUSCH, a PUCCH, and/or reference signals are independently indicated. The above reference signals include a demodulation reference signal (DMRS), a channel state information reference signal (CSI-RS), a sounding reference signal (SRS), a positioning reference signal (PRS), a tracking reference signal (TRS), etc. The CSI-RS includes a CSI-RS used for measurement of channel state information, a CSI-RS used for beam management, or a CSI-RS used for pathloss estimation. The SRS includes a SRS used for the measurement of channel state information based on codebook or non codebook, a SRS used for the beam management, or a SRS used for positioning measurement. PDCCH and PUCCH use a mac control element (MAC CE) to activate the TCI state or the Spatial Relation Info, respectively. PDSCH and PUSCH use a DCI signaling to indicate their respective TCI state or Spatial Relation Info.

At present, in order to reduce the signaling overhead, it is desired to use a unified TCI state. If the base station indicates a unified TCI state for downlink (DL), then the DL unified TCI state may be used for the PDSCH and a part of the PDCCH (such as a user equipment (UE) dedicated PDCCH) of the terminal. If the base station indicates a unified TCI state for uplink (UL), then the UL unified TCI state may be used for PUSCH and PUCCH of the terminal. Currently, the unified TCI state may perform a separate indication via a separate UL TCI state and a separate DL TCI state, or perform a UL-DL joint indication via a joint TCI state or a unified TCI state. The TCI state includes a Quasi Co location (QCL) assumption, in which the QCL assumption includes at least one of QCL Type A, QCL Type B, QCL Type C, and QCL Type D. QCL Type A, QCL Type B, and QCL Type C mainly include at least one of a Doppler shift, a Doppler spread, an average a delay, and a delay spread. QCL Type D corresponds to spatial reception (Rx spatial) parameter information. QCL Type D may also be commonly referred to as beam information.

At present, only an unified TCI communication method corresponding to a single transmission reception point (single-TRP) has been considered. When the base station has multi-TRP serving the terminal, it is necessary to indicate a unified TCI state corresponding to the multi-TRP. Therefore, when the base station contains a plurality of TRPs and each TRP sends its own DCI signaling to schedule its own UL-DL resource, how to indicate the unified TCI state corresponding to multi-TRP for the terminal is a problem that needs to be solved.

It should be noted that a beam may be understood as a DL beam and/or a UL beam, and the DL beam may include at least one of: a DL TCI state, a QCL, and Rx Spatial Parameters. The UL beam may include at least one of: a UL TCI state, Spatial Relation Info, and a Spatial Setting. The beam is indicated by a reference signal ID.

On this basis, the present disclosure provides a communication method, which provides a solution for the terminal to indicate the unified TCI state corresponding to multi-TRP through the indication field included in the first control information carried in the PDCCH on the first CORESET. Below, the technical solution provided in the present disclosure will be introduced and explained through several embodiments.

Referring to FIG. 2, it illustrates a flow chart of a communication method according to an example embodiment of the present disclosure. This method may be applied to a terminal device in a communication system as shown in FIG. 1. The method includes the following steps 201-203.

**At 201,** first control information, carried in a physical downlink control channel (PDCCH) on a first control resource set (CORESET) is received, in which the first control information includes an indication field.

The indication field mentioned above is configured to indicate a first TCI state and/or a first QCL.

Optionally, the first QCL mentioned above includes a first QCL assumption, a first QCL parameter, etc., which are not limited in the embodiments of the present disclosure. It is worth noting that the QCL involved in the embodiments of the present disclosure represents a same meaning, that is, the QCL involved in the embodiments of the present disclosure includes the QCL assumption, the QCL parameter, etc., which will not be repeated below.

Optionally, the first transmission configuration indication (TCI) state and/or the first quasi co location (QCL) includes at least one of three situations: the first TCI state, the first QCL, or the first TCI state and the first QCL. The three situations corresponding to the first TCI state and/or the first QCL will not be repeated in the subsequent embodiments of the present disclosure.

Optionally, the terminal mentioned above contains one or more CORESETs, and each CORESET corresponds to the same resources or different resources, which are not limited here.

For example, the first control information carried in the above-mentioned PDCCH may be DCI, or at least one piece of other control information. In this embodiment, the first control information is taken as the first DCI for explanation.

For example, the indication field contained in the first control information is a TCI state indication field carried in the first DCI. In this embodiment, the DCI carried in the PDCCH is used as an example for explanation.

Optionally, the TCI state indication field indicates the first TCI state; or, the TCI state indication field indicates the first QCL; or, the TCI state indication field indicates the first TCI state and the first QCL, which is not limited here.

Optionally, the first TCI state mentioned above includes at least one of a unified TCI state, a joint TCI state, a separate UL TCI state, and a separate DL TCI state.

Optionally, the first QCL mentioned above includes at least one of Type A, Type B, Type C, and Type D.

**At 202,** at least one channel and/or at least one signal, applicable to the first TCI state indicated by the indication field, is determined.

**At 203,** at least one channel and/or at least one signal, applicable to the first QCL indicated by the indication field, is determined.

It is worth noting that step 202 and step 203 mentioned above are two parallel steps, which may be implemented separately or in combination. For example, The situation of determining at least one channel and/or at least one signal applicable to the first TCI state indicated by the indication field; and/or, determining at least one channel and/or at least one signal applicable to the first QCL indicated by the indication field includes at least one of: determining at least one channel and/or at least one signal applicable to the first TCI state indicated by the indication field; or, determining at least one channel and/or at least one signal applicable to the first QCL indicated by the indication field; or, determining at least one channel and/or at least one signal applicable to both the first TCI state and the first QCL indicated by the indication field.

Optionally, at least one channel includes at least one of a PDCCH, a PUCCH, a PDSCH, and a PUSCH.

When the applicable channel is the PDCCH, the PDCCH corresponds to the CORESET and/or the search space set.

Optionally, the search space set corresponding to the PDCCH includes at least one of a UE specific search space set (USS Set) and a common search space set (CSS Set).

Optionally, the CSS Set includes at least one type from Type 0, Type 0-A, Type 1, Type 2, and Type 3.

Optionally, at least one signal includes a reference signal, such as at least one of reference signals such as DMRS, CSI-RS, SRS, PRS, or TRS.

Optionally, applicable conditions include: determining whether at least one channel is applicable to the first TCI state based on a control resource set pool index (CORESETPoolIndex) corresponding to the CORESET; and/or, determining whether at least one channel is applicable to the first QCL based on the CORESET pool index corresponding to the CORESET; or,

determining the TCI state to which at least one channel and/or at least one signal is applicable based on a TCI state of the CORESET of the PDCCH for scheduling the at least one channel and/or at least one signal; and/or, determining the QCL to which at least one channel and/or at least one signal is applicable based on a TCI state of the CORESET of the PDCCH for scheduling the at least one channel and/or at least one signal; or,

determining the TCI state and/or the QCL to which at least one channel and/or at least one signal is applicable based on the configuration signaling received by the terminal, which is not limited here.

**Embodiments of the present disclosure will be illustrated in accordance with an example that the at least one channel includes a first PDCCH corresponding to a second CORESE.**

**First,** the second CORESET includes a USS set and/or a CSS set Type 3.

In some embodiments, the first CORESET corresponds to the same CORESET pool index as the second CORESET; and a TCI state of the first PDCCH is the same as the first TCI state; and/or, a QCL of the first PDCCH is the same as the first QCL.

The TCI state of the first PDCCH is the same as the first TCI state, which may also be referred to as assuming that the TCI state of the DMRS of the first PDCCH is the same as the first TCI state.

The QCL of the first PDCCH is the same as the first QCL, which may also be referred to as assuming that the QCL of the DMRS of the first PDCCH is the same as the first QCL.

In the present disclosure, the second CORESET only includes a USS set and/or a CSS set corresponding to Type 3, but does not include other types of CSS sets.

In the present disclosure, one CORESET corresponds to one CORESET pool index. When neither the first CORESET nor the second CORESET is configured with a CORESET pool index, it is considered that the first CORESET and the second CORESET correspond to the same CORESET pool index; or, when the CORESET pool indexes configured for the first CORESET and the second CORESET are equal to 0 or 1, it is considered that the first CORESET and the second CORESET correspond to the same CORESET pool index, which is not limited in the present disclosure.

That is to say, when both the first CORESET and the second CORESET are not configured with a CORESET pool index, the first CORESET and the second CORESET correspond to the same CORESET pool index; or, the CORESET pool indexes configured for the first CORESET and the second CORESET are equal to a first value, and the first CORESET and the second CORESET correspond to the same CORESET pool index; or, the CORESET pool indexes configured for the first CORESET and the second CORESET are equal to a second value, and the first CORESET and the second CORESET correspond to the same CORESET pool index.

It is worth noting that the above judgment method on whether the CORESET pool index is the same is also applicable in subsequent embodiments, and the judgment method of the CORESET pool index will not be described in subsequent embodiments.

In the present disclosure, when the first CORESET corresponds to the same CORESET pool index as the second CORESET, it is considered that the TCI state of the first PDCCH corresponding to the second CORESET is the same as the first TCI state, and/or the QCL of the first PDCCH corresponding to the second CORESET is the same as the first QCL. The TCI state of the first PDCCH corresponding to the second CORESET is the same as the first TCI state, and/or, the QCL of the first PDCCH is the same as the first QCL, which includes three situations: 1. the TCI state of the first PDCCH is the same as the first TCI state; 2. the QCL of the first PDCCH is the same as the first QCL; 3. the TCI state of the first PDCCH is the same as the first TCI state, and the QCL of the first PDCCH is the same as the first QCL. This will not be further elaborated in the subsequent embodiments.

**Second,** the second CORESET includes any CSS set.

In the present disclosure, the second CORESET only contains a CSS set of a type other than the Type 3, or only contains a CSS set of any type, that is, the second CORESET does not contain the USS set.

In some embodiments, the first CORESET corresponds to the same CORESET pool index as the second CORESET.

A TCI state of the first PDCCH is the same as the first TCI state; and/or, a QCL of the first PDCCH is the same as the first QCL.

In the present disclosure, when the first CORESET corresponds to the same CORESET pool index as the second CORESET, the first PDCCH is applicable to the first TCI state, and/or, and the first PDCCH is applicable to the first QCL.

In some embodiments, the terminal receives a configuration signaling for configuring the second CORESET to use a specific TCI state.

In the present disclosure, when the first CORESET corresponds to the same CORESET pool index as the second CORESET, and the terminal receives the configuration signaling for configuring the second CORESET to use the specific TCI state, then the first PDCCH applies the first TCI state, and/or the first PDCCH applies the first QCL.

For example, when the first CORESET corresponds to the same CORESET pool index as the second CORESET, and the terminal receives the configuration signaling for configuring indication information 'useIndicatedCCIState' (corresponding to the specific TCI state configured in the above configuration signaling) for the second CORESET, and enables the useIndicatedCCIState, then the first PDCCH is applicable to the first TCI state, and/or, the first PDCCH is applicable to the first QCL.

Optionally, the configuration signaling may be implemented as at least one of a DCI signaling, a MAC CE signaling, and a RRC signaling.

For example, the specific TCI state refers to a Rel-17 TCI state indicated by the first DCI, which is the unified TCI state, including at least one of the joint TCI state, the separate UL TCI state, and the separate DL TCI state. The specific TCI state will not be repeated later.

**Third,** the second CORESET includes a USS set and a CSS set, or the second CORESET includes an initial CORESET, i.e. CORESET # 0.

In the present disclosure, the CSS set may be implemented as a CSS set of any type other than the Type 3, or a CSS set of any type, which is not limited here.

Optionally, the TCI state corresponding to the first PDCCH is the same as or different from the first TCI state; and/or, the QCL corresponding to the first PDCCH is the same as or different from the first QCL. There are mainly two situations, i.e., a first situation of being same (including the TCI state being the same as the first TCI state, and/or the QCL being the same as the first QCL), and a second situation of being different (including the TCI state being different from the first TCI state, and/or the QCL being different from the first QCL).
1. Separate explanations are provided for the first situation, that is, the TCI state of the first PDCCH is the same as the first TCI state; and/or, the QCL of the first PDCCH is the same as the first QCL. The following cases (1)-(2) are included.
   (1) The first CORESET corresponds to the same CORESET pool index as the second CORESET.
      In the present disclosure, when the CORESET pool indexes corresponding to the first CORESET and the second CORESET are the same, the first PDCCH is applicable to the first TCI state; and/or, when the CORESET pool indexes corresponding to the first CORESET and the second CORESET are the same, the first PDCCH is applicable to the first QCL.
   (2) The first CORESET corresponds to the same CORESET pool index as the second CORESET; and a configuration signaling for configuring the second CORESET to use a specific TCI state is received.

Optionally, the CORESET pool indexes corresponding to the first CORESET and the second CORESET are the same, and the terminal receives the configuration signaling for configuring the second CORESET to use the specific TCI state, then the TCI state corresponding to the first PDCCH is the same as the first TCI state, and/or, the QCL of the first PDCCH is the same as the first QCL.

2. Separate explanations are provided for the second situation, that is, the TCI state of the first PDCCH is different from the first TCI state; and/or, the QCL of the first PDCCH is different from the first QCL. The following cases (3)-(4) are included.
(3) The first CORESET corresponds to the same CORESET pool index as the second CORESET; and the terminal receives a configuration signaling for configuring the second CORESET not to use a specific TCI state.
   Optionally, when the CORESET pool indexes corresponding to the first CORESET and the second CORESET are the same, and the terminal receives the configuration signaling for indicating that the second CORESET does not use the specific TCI state, then the first PDCCH is not applicable to the first TCI state, and/or, the first PDCCH is not applicable to the first QCL.
(4) The first CORESET corresponds to the same CORESET pool index as the second CORESET; and the terminal does not receive (i.e., fails to receive) the configuration signaling for determining whether the second CORESET uses the specific TCI state.

Optionally, when the CORESET pool indexes corresponding to the first CORESET and the second CORESET are the same and the terminal does not receive the configuration signaling, it cannot be determined whether the second CORESET may use the specific TCI state. Therefore, the first PDCCH is not applicable to the first TCI state, and/or the first PDCCH is not applicable to the first QCL.

In the present disclosure, in case that the TCI state corresponding to the first PDCCH is different from the first TCI state, and/or the QCL corresponding to the first PDCCH is different from the first QCL, a second TCI state is activated for the second CORESET through the MAC CE signaling; and/or; a second QCL is activated for the second CORESET through the MAC CE signaling. At this point, the TCI state corresponding to the first PDCCH is the second TCI state, and/or, the QCL corresponding to the first PDCCH is the second QCL.

That is to say, the second TCI state, activated by the MAC CE for the third CORESET, is received; and/or, the second QCL, activated by the MAC CE for the second CORESET, is received

In the present disclosure, an initial CORESET is implemented as CORESET #0, and the CORESET #0 must be associated with the CSS set Type #0. When the second CORESET is the CORESET #0, the corresponding implementation is the same as the above, which will not be repeated here.

**Embodiments of the present disclosure will be further illustrated with an example that the at least one channel includes a second PDCCH, where the second PDCCH corresponds to a first SS set and a third CORESET.**

In the present disclosure, whether the second PDCCH is applicable to the first TCI state and/or whether the second PDCCH is applicable to the first QCL is determined based on at least one of the first SS set and the third CORESET.

In the present disclosure, the first SS set may be implemented as at least one of the USS set or the CSS set.

**First,** the first SS set includes a USS set and/or a CSS set Type 3.

In some embodiments, the first CORESET corresponds to the same CORESET pool index as the third CORESET; a TCI state of the second PDCCH is the same as the first TCI state; and/or, a QCL of the second PDCCH is the same as the first QCL.

In the present disclosure, the first SS set is implemented to only include the USS set and/or the CSS set corresponding to type 3, but does not include other types of CSS sets. In the present disclosure, the type 3 is implemented as the Type 3.

In the present disclosure, when the CORESET pool indexes corresponding to the first CORESET and the third CORESET are the same, it is considered that the TCI state of the third PDCCH is applicable to the first TCI state; and/or; the QCL of the third PDCCH is applicable to the first QCL. A determination rule for the same CORESET pool index corresponding to the first CORESET and the third CORESET is the same as the determination rule for the same CORESET pool index corresponding to the first CORESET and the second CORESET.

That is to say, when the first CORESET and the third CORESET are not configured with a CORESET pool index, the first CORESET and the third CORESET correspond to the same CORESET pool index; or, the CORESET pool indexes configured for the first CORESET and the third CORESET are equal to a first value, and the first CORESET and the third CORESET correspond to the same CORESET pool index; or, the CORESET pool indexes configured for the first CORESET and the third CORESET are equal to a second value, and the first CORESET and the third CORESET correspond to the same CORESET pool index.

**Second,** the first SS set includes any CSS set, or the first SS set includes an initial SS set.

In the present disclosure, the first SS set is implemented as a CSS set of a type other than the Type 3, or a CSS set of any type.
1. Separate explanations are provided for the same situation where the TCI state of the first PDCCH is the same as the first TCI state; and/or, the QCL of the first PDCCH is the same as the first QCL. The following cases (1)-(2) are included.
   (1) The first CORESET corresponds to the same CORESET pool index as the third CORESET.
      In the present disclosure, when the CORESET pool indexes corresponding to the first CORESET and the third CORESET are the same, it is considered that the second PDCCH is applicable to the first TCI state, and/or, and the second PDCCH is applicable to the first QCL.
   (2) The first CORESET corresponds to the same CORESET pool index as the third CORESET; and a configuration signaling is received, in which the configuration signaling configures the third CORESET and/or the first SS set to use a specific TCI state.

In the present disclosure, the first CORESET corresponds to the same CORESET pool index as the third CORESET, and the terminal receives the configuration signaling for configuring the third CORESET and/or the first SS set to use the specific TCI state, then a TCI state corresponding to the second PDCCH is the same as the first TCI state, and/or, a QCL of the second PDCCH is the same as the first QCL.

2. Separate explanations are provided for the different situation where the TCI state of the first PDCCH is different from the first TCI state; and/or, the QCL of the first PDCCH is different from the first QCL. The following cases (3)-(4) are included.

(3) The first CORESET corresponds to the same CORESET pool index as the third CORESET; and the terminal receives a configuration signaling, in which the configuration signaling configures the third CORESET and/or the first SS set not to use a specific TCI state.

In the present disclosure, when the first CORESET corresponds to the same CORESET pool index as the third CORESET, and the terminal receives the configuration signaling, in which the configuration signaling configures the third CORESET and/or the first SS set not to use the specific TCI state, then a TCI state corresponding to the second PDCCH is not applicable to the first TCI state, and/or a QCL of the second PDCCH is not applicable to the first QCL.

(4) The first CORESET corresponds to the same CORESET pool index as the third CORESET; and the terminal does not receive a configuration signaling, in which the configuration signaling is configured to determine whether the third CORESET and/or the first SS set uses a specific TCI state.

In the present disclosure, when the first CORESET corresponds to the same CORESET pool index as the third CORESET, and if the terminal does not receive the configuration signaling, it cannot be determined whether the third CORESET and/or the first SS set may use the specific TCI state, then it is considered that the TCI state corresponding to the second PDCCH is not applicable to the first TCI state, and/or the QCL of the second PDCCH is not applicable to the first QCL.

In the present disclosure, in case that the TCI state corresponding to the second PDCCH is different from the first TCI state, and/or the QCL corresponding to the second PDCCH is different from the first QCL, the third TCI state is activated for the third CORESET and/or the first SS set through the MAC CE signaling; and/or; the third QCL is activated for the third CORESET and/or the first SS set through the MAC CE signaling. At this point, the TCI state corresponding to the second PDCCH is the third TCI state, and/or, the QCL corresponding to the second PDCCH is the third QCL.

That is to say, the third TCI state, activated by the MAC CE signaling for the third CORESET and/or the first SS set, is received; and/or, the third QCL, activated by the MAC CE signaling for the third CORESET and/or the first SS set, is received.

In the present disclosure, the initial SS set is implemented as SS Set #0, in which SS Set #0 corresponds to the CSS set Type #0. When the first SS set is implemented as SS Set #0, the applicable method is the same as the above, which will not be repeated here.

**Embodiments of the present disclosure will be further illustrated with an example that the at least one channel includes at least one of a PDSCH, a PUCCH, and a PUSCH.**

In the present disclosure, the PUSCH includes at least one of a PUSCH of Dynamic-grant and a PUSCH of Configure-grant.

**First,** the at least one channel is scheduled.

In some embodiments, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and the TCL state of the at least one channel is the same as the first TCI state; and/or, the QCL of the at least one channel is the same as the first QCL.

In the present disclosure, the PDCCH may be used to schedule at least one channel among the PDSCH, the PUCCH, and the PUSCH.

In the present disclosure, when the TCL state corresponding to the CORESET and/or the SS set corresponding to the PDCCH for scheduling is the same as the first TCI state; and/or, when the QCL corresponding to the CORESET and/or the SS set corresponding to the PDCCH for scheduling is the same as the first QCL, it is indicated that the TCI state corresponding to the channel scheduled by the PDCCH is the first TCI state; and/or, the QCL corresponding to the channel scheduled by the PDCCH is the first QCL.

It should be noted that the TCI state corresponding to one channel is the first TCI state; and/or; the QCL corresponding to one channel is the first QCL, which is also known as that the TCI state corresponding to the DMRS of one channel is the first TCI state; and/or; the QCL corresponding to the DMRS of one channel is the first QCL.

**Second,** the at least one channel is not scheduled.

In some embodiments, configuration information for RRC and/or MAC CE is received, in which the configuration information indicates whether the at least one channel uses a specific TCI state, where the at least one channel is not scheduled by a DCI signaling.

In the present disclosure, there is still a situation where the at least one channel is not scheduled by the DCI signaling. When the at least one channel is not scheduled by the DCI signaling, the at least one channel is configured through the RRC signaling or the MAC CE signaling, where the channel is configured to use which TCI state (indicated by the DCI) of the CORESET corresponding to the CORESET pool index.
1. A situation where the at least one channel uses a specific TCI state.

In the present disclosure, the configuration information for RRC and/or MAC CE indicates that the at least one channel uses the specific TCI state; the TCI state of the at least one channel is the same as the first TCI state; and/or, the QCL of the at least one channel is the same as the first QCL.

In the present disclosure, when the at least one channel is configured by the RRC signaling and/or the MAC CE signaling to enable the channel to use the specific TCI state, it is indicated that the TCI state corresponding to the channel is the first TCI state; and/or the QCL corresponding to the channel is the first QCL.

2. A situation where the at least one channel does not use a specific TCI state.

In some embodiments, the configuration information for RRC and/or MAC CE indicates that the at least one channel does not use the specific TCI state; the TCI state of the at least one channel is different from the first TCI state; and/or, the QCL of the at least one channel is different from the first QCL.

In the present disclosure, when the at least one channel does not to use the specific TCI state, it is indicated that the TCI state of the at least one channel is not applicable to the first TCI state; and/or; the QCL of the at least one channel is not applicable to the first QCL.

In some embodiments, a fourth TCI state configured for the at least one channel is received through the RRC and/or the MAC CE; and/or, a fourth QCL configured for the at least one channel is received through the RRC and/or the MAC CE.

A TCI state of the at least one channel is the same as the fourth TCI state; and/or, a QCL of the at least one channel is the same as the fourth QCL.

In the present disclosure, the fourth TCI state is configured for the channel through the RRC and/or the MAC CE and/or the DCI; and/or, the fourth QCL is configured for the channel through the RRC and/or the MAC CE and/or the DCI, that is, the TCI state of the channel is the fourth TCI state, and/or, the QCL of the channel is the fourth QCL.

**Embodiments of the present disclosure will be further illustrated with an example that the at least one signal includes a DMRS, a CSI-RS, and a SRS.**

Optionally, the CSI-RS includes at least one of a CSI-RS for a CSI measurement or an aperiodic CSI-RS for a beam management measurement.

Optionally, the SRS includes at least one of an aperiodic SRS or a SRS for the beam management.

**First,** the at least one signal needs to be scheduled.

In some embodiments, a TCI state of a SS set and/or a CORESET corresponding to the PDCCH for scheduling the at least one signal is the same as the first TCI state; and/or, a QCL of a SS set and/or a CORESET SS set corresponding to the PDCCH for scheduling the at least one signal is the same as the first QCL; and the TCI state of at least one signal is the same as the first TCI state; and/or, the QCL of at least one signal is the same as the first QCL.

In the present disclosure, the PDCCH may be used to schedule the at least one signal in the CSI-RS or the SRS.

In the present disclosure, when a TCI state corresponding to a CORESET and/or a SS set corresponding to the PDCCH for scheduling is the same as the first TCI state; and/or; when a QCL corresponding to a CORESET and/or a SS set corresponding to the PDCCH for scheduling is the same as the first QCL, it is indicated that the TCI state corresponding to the signal scheduled by the PDCCH is the first TCI state; and/or; the QCL corresponding to the signal scheduled by the PDCCH is the first QCL.

It should be noted that the TCI state corresponding to one signal is the first TCI state; and/or; the QCL corresponding to one signal is the first QCL, which is also known as that the TCI state corresponding to the DMRS of one signal is the first TCI state; and/or, the QCL corresponding to the DMRS of one signal is the first QCL.

**Second,** the at least one signal is not scheduled.

In some embodiments, configuration information for RRC and/or MAC CE is received, in which the configuration information indicates whether the at least one signal uses a specific TCI state, where the at least one signal is not scheduled by a DCI signaling.

In the present disclosure, there is still a situation where the at least one signal is not scheduled by the DCI signaling. When the at least one signal is not scheduled by the DCI signaling, the at least one signal is configured through the RRC signaling or the MAC CE signaling, where the signal is configured to use which TCI state (indicated by the DCI) of the CORESET corresponding to the CORESET pool index.
1. A situation where the at least one signal uses a specific TCI state.

In the present disclosure, the configuration information for RRC and/or MAC CE indicates that the at least one signal uses the specific TCI state; the TCI state of the at least one channel is the same as the first TCI state; and/or, the QCL of the at least one channel is the same as the first QCL.

In the present disclosure, when the at least one signal is configured by the RRC signaling and/or the MAC CE signaling to enable the signal to use the specific TCI state, it is indicated that the TCI state corresponding to the signal is the first TCI state; and/or the QCL corresponding to the signal is the first QCL.

2. A situation where the at least one signal does not use a specific TCI state.

In some embodiments, the configuration information for RRC and/or MAC CE indicates that the at least one signal does not use the specific TCI state; the TCI state of at least one signal is different from the first TCI state; and/or, the QCL of at least one signal is different from the first QCL.

In the present disclosure, when the at least one signal does not use the specific TCI state, it is indicated that the TCI state of the at least one signal is not applicable to the first TCI state; and/or; the QCL of the at least one signal is not applicable to the first QCL.

In some embodiments, a fifth TCI state configured for the at least one signal is received through the RRC and/or the MAC CE; and/or, a fifth QCL configured for the at least one signal is received through the RRC and/or the MAC CE.

A TCI state of the at least one signal is the same as the fifth TCI state; and/or, a QCL of the at least one signal is the same as the fifth QCL.

In the present disclosure, the fifth TCI state is configured for the signal through the RRC and/or the MAC CE and/or the DCI; and/or, the fifth QCL is configured for the signal through the RRC and/or the MAC CE and/or the DCI, that is, the TCI state of the signal is the fifth TCI state, and/or, the QCL of the signal is the fifth QCL.

In summary, in the communication method according to the present disclosure, after the indication field contained in the first control information carried in the PDCCH on the first CORESET is received, the applicable situations of each channel and each signal corresponding to the first TCI state and/or the first QCL indicated by the indication field are determined, which thus reduces a signal overhead during an indication process of the TCI state, and improves a beam transmission performance.

For example, FIG 3 is a flow chart of a communication method according to another example embodiment of the present disclosure. Taking the method executed by an access network device as described in FIG 1 as an example, as shown in FIG 3, the method includes the following step 301.

**At 301,** first control information carried in a PDCCH is sent to a terminal through a first CORESET.

The first control information mentioned above includes an indication field, in which the indication field indicates a first TCI state and/or a first QCL. Optionally, the indication field indicates at least one channel and/or at least one signal applicable to the first TCI state; and/or, the indication field indicates at least one channel and/or at least one signal applicable to the first QCL.

Optionally, the above access network device includes one or more TRPs, each of which corresponds to one CORESET, and each CORESET corresponds to the same or different CORESETPoolIndex, which is not limited here.

Optionally, the first control information carried in the PDCCH sent to the terminal may be DCI or other control information, which is not limited here.

For example, the indication field contained in the first control information is a TCI state indication field carried in the first DCI, in which a corresponding beam is used to transmit the PDSCH and/or the PDCCH. In this embodiment, the DCI carried in the PDCCH is taken as an example.

Optionally, the at least one channel includes at least one of a PDCCH, a PUCCH, a PDSCH, and a PUSCH.

Optionally, the at least one signal includes a reference signal, such as at least one of a DMRS, a CSI-RS, a SRS, a PRS, or a TRS reference signals.

**IEmbodiments of the present disclosure will be further illustrated with an example that the at least one channel includes a first PDCCH corresponding to a second CORESET.**

**First,** the second CORESET includes a USS set and/or a CSS set Type 3.

In some embodiments, the first CORESET corresponds to the same CORESET pool index as the second CORESET; the TCI state of the first PDCCH is the same as the first TCI state; and/or, the QCL of the first PDCCH is the same as the first QCL.

The TCI state of the first PDCCH is the same as the first TCI state, which may also be referred to as assuming that the TCI state of the DMRS of the first PDCCH is the same as the first TCI state.

The QCL of the first PDCCH is the same as the first QCL, which may also be referred to as assuming that the QCL of the DMRS of the first PDCCH is the same as the first QCL.

In the present disclosure, the second CORESET only includes a USS set and/or a CSS set corresponding to Type 3, but does not include other types of CSS sets.

In the present disclosure, one CORESET corresponds to one CORESET pool index. When neither the first CORESET nor the second CORESET is configured with a CORESET pool index, it is considered that the first CORESET and the second CORESET correspond to the same CORESET pool index; or, when the CORESET pool indexes configured for the first CORESET and the second CORESET are equal to 0 or 1, it is considered that the first CORESET and the second CORESET correspond to the same CORESET pool index, which is not limited in the present disclosure.

That is to say, when both the first CORESET and the second CORESET are not configured with a CORESET pool index, the first CORESET and the second CORESET correspond to the same CORESET pool index; or, the CORESET pool indexes configured for the first CORESET and the second CORESET are equal to a first value, and the first CORESET and the second CORESET correspond to the same CORESET pool index; or, the CORESET pool indexes configured for the first CORESET and the second CORESET are equal to a second value, and the first CORESET and the second CORESET correspond to the same CORESET pool index.

It is worth noting that the above judgment method whether the CORESET pool index is the same is also applicable in subsequent embodiments, and the judgment method of the CORESET pool index will not be described in subsequent embodiments.

In the present disclosure, when the first CORESET corresponds to the same CORESET pool index as the second CORESET, it is considered that the TCI state of the first PDCCH corresponding to the second CORESET is the same as the first TCI state, and/or the QCL of the first PDCCH corresponding to the second CORESET is the same as the first QCL. The TCI state of the first PDCCH corresponding to the second CORESET is the same as the first TCI state, and/or, the QCL of the first PDCCH is the same as the first QCL, which includes three situations: 1. the TCI state of the first PDCCH is the same as the first TCI state; 2. the QCL of the first PDCCH is the same as the first QCL; 3. the TCI state of the first PDCCH is the same as the first TCI state, and the QCL of the first PDCCH is the same as the first QCL. This will not be further elaborated in the subsequent embodiments.

**Second,** the second CORESET includes any CSS set.

In the present disclosure, the second CORESET only contains a CSS set of a type other than the Type 3, or only contains a CSS set of any type, that is, the second CORESET does not contain the USS set.

In some embodiments, the first CORESET corresponds to the same CORESET pool index as the second CORESET.

A TCI state of the first PDCCH is the same as the first TCI state; and/or, a QCL of the first PDCCH is the same as the first QCL.

In the present disclosure, when the first CORESET corresponds to the same CORESET pool index as the second CORESET, the first PDCCH is applicable to the first TCI state, and/or, and the first PDCCH is applicable to the first QCL.

Optionally, the configuration signaling is sent to the terminal, in which the configured signaling configures the second CORESET to use a specific TCI state.

For example, when the first CORESET corresponds to the same CORESET pool index as the second CORESET, and the access network device sends the configuration signaling to the terminal that configures indication information 'uselndicatedCCIState' (corresponding to the specific TCI state configured in the above configuration signaling ) for the second CORESET, and enables the useIndicatedCCIState, then the first PDCCH is applicable to the first TCI state, and/or, the first PDCCH is applicable to the first QCL.

Optionally, the configuration signaling may be implemented as at least one of a DCI signaling, a MAC CE signaling, and a RCC signaling.

For example, the specific TCI state refers to a Rel-17 TCI state indicated by the first DCI, which is the unified TCI state, including at least one of the joint TCI state, the separate UL TCI state, and the separate DL TCI state. The specific TCI state will not be repeated later.

**Third,** the second CORESET includes a USS set and a CSS set, or the second CORESET includes an initial CORESET.

In the present disclosure, the CSS set may be implemented as a CSS set of any type other than the Type 3, or as a CSS set of any type, which is not limited here.

Optionally, the TCI state corresponding to the first PDCCH is the same as or different from the first TCI state; and/or, the QCL corresponding to the first PDCCH is the same as or different from the first QCL. There are mainly two types of situations, i.e., a first situation of being same (including the TCI state being the same as the first TCI state, and/or the QCL being the same as the first QCL), and a second situation of being different (including the TCI state being different from the first TCI state, and/or the QCL being different from the first QCL).
1. Separate explanations are provided for the first situation, that is, the TCI state of the first PDCCH is the same as the first TCI state; and/or, the QCL of the first PDCCH is the same as the first QCL. The following cases (1)-(2) are included.
   (1) The first CORESET corresponds to the same CORESET pool index as the second CORESET.
      In the present disclosure, when the CORESET pool indexes corresponding to the first CORESET and the second CORESET are the same, the first PDCCH is applicable to the first TCI state; and/or, when the CORESET pool indexes corresponding to the first CORESET and the second CORESET are the same, the first PDCCH is applicable to the first QCL.
   (2) The first CORESET corresponds to the same CORESET pool index as the second CORESET; and the access network device sends a configuration signaling to the terminal, in which the configuration signaling configures the second CORESET to use a specific TCI state.

Optionally, the CORESET pool indexes corresponding to the first CORESET and the second CORESET are the same, and the access network device sends the configuration signaling to the terminal, in which the configuration signaling configures the second CORESET to use the specific TCI state; then the TCI state corresponding to the first PDCCH is the same as the first TCI state, and/or, the QCL of the first PDCCH is the same as the first QCL.

2. Separate explanations are provided for the second situation, that is, the TCI state of the first PDCCH is different from the first TCI state; and/or, the QCL of the first PDCCH is different from the first QCL. The following cases (3)-(4) are included.

(3) The first CORESET corresponds to the same CORESET pool index as the second CORESET; and the access network device sends a configuration signaling to the terminal, in which the configuration signaling configures the second CORESET not to use a specific TCI state.

Optionally, when the CORESET pool indexes corresponding to the first CORESET and the second CORESET are the same, and the terminal receives the configuration signaling for indicating that the second CORESET does not use the specific TCI state, then the first PDCCH is not applicable to the first TCI state, and/or the first PDCCH is not applicable to the first QCL.

(4) The first CORESET corresponds to the same CORESET pool index as the second CORESET; and the access network device does not send a configuration signaling to the terminal, in which the configuration signaling is configured to determine whether the second CORESET uses a specific TCI state.

Optionally, when the CORESET pool indexes corresponding to the first CORESET and the second CORESET are the same, and the access network device does not send the configuration signaling to the terminal, the terminal cannot determine whether the second CORESET may use the specific TCI state. Therefore, the first PDCCH is not applicable to the first TCI state, and/or the first PDCCH is not applicable to the first QCL.

In the present disclosure, in case that the TCI state corresponding to the first PDCCH is different from the first TCI state, and/or the QCL corresponding to the first PDCCH is different from the first QCL, a second TCI state is activated for the second CORESET through the MAC CE signaling; and/or; a second QCL is activated for the second CORESET through the MAC CE signaling. At this point, the TCI state corresponding to the first PDCCH is the second TCI state, and/or, the QCL corresponding to the first PDCCH is the second QCL.

That is to say, the second TCI state, activated by the MAC CE for the third CORESET, is received; and/or, the second QCL, activated by the MAC CE for the second CORESET, is received.

In the present disclosure, an initial CORESET is implemented as CORESET #0, and the CORESET #0 must be associated with the CSS set Type #0. When the second CORESET is the CORESET #0, the corresponding method is the same as the above, which will not be repeated here.

**Embodiments of the present disclosure will be further illustrated with an example that the at least one channel includes a second PDCCH, where the second PDCCH corresponds to a first SS set and a third CORESET.**

In the present disclosure, whether the second PDCCH is applicable to the first TCI state and/or whether the second PDCCH is applicable to the first QCL is determined based on at least one of the first SS set and the third CORESET.

In the present disclosure, the first SS set may be implemented as at least one of the USS set or the CSS set.

First, the first SS set includes a USS set and/or a CSS set Type 3.

In some embodiments, the first CORESET corresponds to the same CORESET pool index as the third CORESET; a TCI state of the second PDCCH is the same as the first TCI state; and/or, a QCL of the second PDCCH is the same as the first QCL.

In the present disclosure, the first SS set is implemented to only include the USS set and/or the CSS set corresponding to type 3, but does not include other types of CSS sets. In the present disclosure, the type 3 is implemented as the Type 3.

In the present disclosure, when the CORESET pool indexes corresponding to the first CORESET and the third CORESET are the same, it is considered that the TCI state of the third PDCCH is applicable to the first TCI state; and/or; the QCL of the third PDCCH is applicable to the first QCL. A determination rule for the same CORESET pool index corresponding to the first CORESET and the third CORESET is the same as the determination rule for the same CORESET pool index corresponding to the first CORESET and the second CORESET.

That is to say, when the first CORESET and the third CORESET are not configured with a CORESET pool index, the first CORESET and the third CORESET correspond to the same CORESET pool index; or, the CORESET pool indexes configured for the first CORESET and the third CORESET are equal to a first value, and the first CORESET and the third CORESET correspond to the same CORESET pool index; or, the CORESET pool indexes configured for the first CORESET and the third CORESET are equal to a second value, and the first CORESET and the third CORESET correspond to the same CORESET pool index.

**Second,** the first SS set includes any CSS set, or the first SS set includes an initial SS set.

In the present disclosure, the first SS set is implemented as a CSS set other than the Type 3, or a CSS set of any type.
1. Separate explanations are provided for the same situation where the TCI state of the first PDCCH is the same as the first TCI state; and/or, the QCL of the first PDCCH is the same as the first QCL. The following cases (1)-(2) are included.
   (1) The first CORESET corresponds to the same CORESET pool index as the third CORESET.
      In the present disclosure, when the CORESET pool indexes corresponding to the first CORESET and the third CORESET are the same, it is considered that the second PDCCH is applicable to the first TCI state, and/or, and the second PDCCH is applicable to the first QCL.
   (2) The first CORESET corresponds to the same CORESET pool index as the third CORESET; and the access network device sends a configuration signaling to the terminal, in which the configuration signaling configures the third CORESET and/or the first SS set to use a specific TCI state.

In the present disclosure, the first CORESET corresponds to the same CORESET pool index as the third CORESET, and the access network device sends the configuration signaling to the terminal, in which the configuration signaling configures the third CORESET and/or the first SS set to use the specific TCI state. Then, a TCI state corresponding to the second PDCCH is the same as the first TCI state, and/or, a QCL of the second PDCCH is the same as the first QCL.

2. Separate explanations are provided for the different situation where the TCI state of the first PDCCH is different from the first TCI state; and/or, the QCL of the first PDCCH is different from the first QCL. The following cases (3)-(4) are included.

(3) The first CORESET corresponds to the same CORESET pool index as the third CORESET; and the access network device sends a configuration signaling to the terminal, in which the configuration signaling configures the third CORESET and/or the first SS set not to use a specific TCI state.

In the present disclosure, when the first CORESET corresponds to the same CORESET pool index as the third CORESET, and the access network device sends the configuration signaling to the terminal, in which the configuration signaling configures the third CORESET and/or the first SS set not to use the specific TCI state. Then, a TCI state corresponding to the second PDCCH is not applicable to the first TCI state, and/or a QCL of the second PDCCH is not applicable to the first QCL.

(4) The first CORESET corresponds to the same CORESET pool index as the third CORESET; and the access network device does not send a configuration signaling to the terminal, in which the configuration signaling is configured to determine whether the third CORESET and/or the first SS set uses a specific TCI state.

In the present disclosure, when the first CORESET corresponds to the same CORESET pool index as the third CORESET, and the access network device does not send the configuration signaling to the terminal, the terminal cannot determine whether the third CORESET and/or the first SS set may use the specific TCI state. Therefore, it is considered that the TCI state corresponding to the second PDCCH is not applicable to the first TCI state, and/or the QCL of the second PDCCH is not applicable to the first QCL.

In the present disclosure, in case that the TCI state corresponding to the second PDCCH is different from the first TCI state, and/or the QCL corresponding to the second PDCCH is different from the first QCL, the third TCI state is activated for the third CORESET and/or the first SS set through the MAC CE signaling; and/or; the third QCL is activated for the third CORESET and/or the first SS set through the MAC CE signaling. At this point, the TCI state corresponding to the second PDCCH is the third TCI state, and/or, the QCL corresponding to the second PDCCH is the third QCL.

That is to say, the third TCI state, activated by the MAC CE signaling for the third CORESET and/or the first SS set, is received; and/or, the third QCL, activated by the MAC CE signaling for the third CORESET and/or the first SS set, is received.

In the present disclosure, the initial SS set is implemented as SS Set #0, in which SS Set #0 corresponds to the CSS set of Type #0. When the first SS set is implemented as SS Set #0, the applicable method is the same as above, which will not be repeated here.

**Embodiments of the present disclosure will be further illustrated with an example that the at least one channel includes at least one of a PDSCH, a PUCCH, and a PUSCH.**

In the present disclosure, the PUSCH includes at least one of a PUSCH of Dynamic-grant and a PUSCH of Configure-grant.

**First,** the at least one channel is scheduled.

In some embodiments, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and the TCL state of the at least one channel is the same as the first TCI state; and/or, the QCL of the at least one channel is the same as the first QCL.

In the present disclosure, the PDCCH may be used to schedule at least one channel among the PDSCH, the PUCCH, and the PUSCH.

In the present disclosure, when a TCL state corresponding to a CORESET and/or a SS set corresponding to the PDCCH for scheduling is the same as the first TCI state; and/or; when a QCL corresponding to a CORESET and/or a SS set corresponding to the PDCCH for scheduling is the same as the first QCL, it is indicated that the TCI state corresponding to the channel scheduled by the PDCCH is the first TCI state; and/or, the QCL corresponding to the channel scheduled by the PDCCH is the first QCL.

It should be noted that the TCI state corresponding to one channel is the first TCI state; and/or; the QCL corresponding to one channel is the first QCL, which also known as that the TCI state corresponding to the DMRS of one channel is the first TCI state; and/or; the QCL corresponding to the DMRS of one channel is the first QCL.

**Second,** the at least one channel is not scheduled.

In some embodiments, configuration information for RRC and/or MAC CE is received, in which the configuration information indicates whether the at least one channel uses a specific TCI state, where the at least one channel is not scheduled by a DCI signaling.

In the present disclosure, there is still a situation where the at least one channel is not scheduled by the DCI signaling. When the at least one channel is not scheduled by the DCI signaling, the at least one channel is configured through the RRC signaling or the MAC CE signaling, where the channel is configured to use which TCI state (indicated by the DCI) of the CORESET corresponding to the CORESET pool index.
1. A situation where the at least one channel uses a specific TCI state.

In the present disclosure, the configuration information for RRC and/or MAC CE indicates that the at least one channel uses the specific TCI state; the TCI state of the at least one channel is the same as the first TCI state; and/or, the QCL of the at least one channel is the same as the first QCL.

In the present disclosure, when the at least one channel is configured by the RRC signaling and/or the MAC CE signaling to enable the channel to use the specific TCI state, it is indicated that the TCI state corresponding to the channel is the first TCI state; and/or the QCL corresponding to the channel is the first QCL.

2. A situation where the at least one channel does not use a specific TCI state.

In some embodiments, the configuration information for RRC and/or MAC CE indicates that the at least one channel does not use the specific TCI state; the TCI state of the at least one channel is different from the first TCI state; and/or, the QCL of at least one channel is different from the first QCL.

In the present disclosure, when the at least one channel does not to use the specific TCI state, it is indicated that the TCI state of the at least one channel is not applicable to the first TCI state; and/or; the QCL of the at least one channel is not applicable to the first QCL.

In some embodiments, a fourth TCI state configured for at least one channel is received through the RRC and/or the MAC CE; and/or, a fourth QCL configured for at least one channel is received through the RRC and/or the MAC CE.

A TCI state of the at least one channel is the same as the fourth TCI state; and/or, a QCL of the at least one channel is the same as the fourth QCL.

In the present disclosure, the fourth TCI state is configured for the channel through the RRC and/or the MAC CE and/or the DCI; and/or, the fourth QCL is configured for the channel through the RRC and/or the MAC CE and/or the DCI, that is, the TCI state of the channel is the fourth TCI state, and/or, the QCL of the channel is the fourth QCL.

**Embodiments of the present disclosure will be further illustrated with an example that the at least one signal includes a DMRS, a CSI-RS, and a SRS.**

Optionally, the CSI-RS includes at least one of a CSI-RS for a CSI measurement or a aperiodic CSI-RS for a beam management measurement.

Optionally, the SRS includes at least one of an aperiodic SRS or a SRS for the beam management.

**First,** the at least one signal needs to be scheduled.

In some embodiments, a TCI state of a SS set and/or a CORESET corresponding to the PDCCH for scheduling the at least one signal is the same as the first TCI state; and/or, a QCL of a SS set and/or a CORESET SS set corresponding to the PDCCH for scheduling the at least one signal is the same as the first QCL; and the TCI state of the at least one signal is the same as the first TCI state; and/or, the QCL of the at least one signal is the same as the first QCL.

In the present disclosure, the PDCCH may be used to schedule the at least one signal in the CSI-RS or the SRS.

In the present disclosure, when a TCI state corresponding to a CORESET and/or a SS set corresponding to the PDCCH for scheduling is the same as the first TCI state; and/or; when a QCL corresponding to a CORESET and/or a SS set corresponding to the PDCCH for scheduling is the same as the first QCL, it is indicated that the TCI state corresponding to the signal scheduled by the PDCCH is the first TCI state; and/or; the QCL corresponding to the signal scheduled by the PDCCH is the first QCL.

It should be noted that the TCI state corresponding to one signal is the first TCI state; and/or; the QCL corresponding to one signal is the first QCL, which is also known as that the TCI state corresponding to the DMRS of one signal is the first TCI state; and/or, the QCL corresponding to the DMRS of one signal is the first QCL.

**Second,** the at least one signal is not scheduled.

In some embodiments, configuration information for RRC and/or MAC CE is received, in which the configuration information indicates whether the at least one signal uses a specific TCI state, where the at least one signal is not scheduled by a DCI signaling.

In the present disclosure, there is still a situation where the at least one signal is not scheduled by the DCI signaling. When the at least one signal is not scheduled by the DCI signaling, the at least one signal is configured through the RRC signaling or the MAC CE signaling, where the signal is configured to use which TCI state (indicated by the DCI) of the CORESET corresponding to the CORESET pool index.
1. A situation where the at least one signal uses a specific TCI state.

In the present disclosure, the configuration information for RRC and/or MAC CE indicates that the at least one signal uses the specific TCI state; the TCI state of the at least one channel is the same as the first TCI state; and/or, the QCL of at least one channel is the same as the first QCL.

In the present disclosure, when the at least one signal is configured by the RRC signaling and/or the MAC CE signaling to enable the signal to use the specific TCI state, it is indicated that the TCI state corresponding to the signal is the first TCI state; and/or the QCL corresponding to the signal is the first QCL.

2. A situation where the at least one signal does not use a specific TCI state.

In some embodiments, the configuration information for RRC and/or MAC CE indicates that the at least one signal does not use the specific TCI state; the TCI state of the at least one signal is different from the first TCI state; and/or, the QCL of the at least one signal is different from the first QCL.

In the present disclosure, when the at least one signal does not use the specific TCI state, it is indicated that the TCI state of the at least one signal is not applicable to the first TCI state; and/or; the QCL of the at least one signal is not applicable to the first QCL.

In some embodiments, the access network device sends a fifth TCI state configured for the at least one signal to the terminal through the RRC and/or the MAC CE; and/or, the access network device sends a fifth QCL configured for the at least one signal to the terminal through the RRC and/or the MAC CE.

A TCI state of the at least one signal is the same as the fifth TCI state; and/or, a QCL of the at least one signal is the same as the fifth QCL.

In the present disclosure, the fifth TCI state is configured for the signal through the RRC and/or the MAC CE and/or the DCI; and/or, the fifth QCL is configured for the signal through the RRC and/or the MAC CE and/or the DCI, that is, the TCI state of the signal is the fifth TCI state, and/or, the QCL of the signal is the fifth QCL.

In summary, in the communication method according to the present disclosure, the indication field contained in the first control information carried in the PDCCH on the first CORESET is sent to the terminal, so as to indicate the applicable situations of each channel and each signal corresponding to the first TCI state and/or the first QCL, which thus reduces the signal overhead during the indication process of the TCI state, and improves the beam transmission performance.

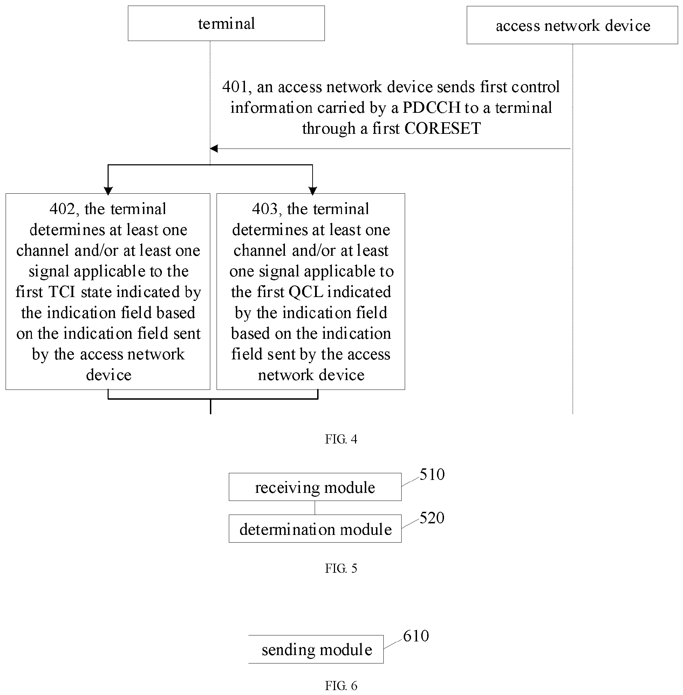

For example, FIG. 4 is a flow chart of a communication method according to an example embodiment of the present disclosure. Taking the method applied to the communication system shown in FIG. 1 as an example, as shown in FIG 4, the method includes the following steps 401-403.

**At 401,** an access network device sends first control information carried in a PDCCH to a terminal through a first CORESET.

The first control information mentioned above includes an indication field, in which the indication field indicates a first TCI state or a first QCL.

**At 402,** the terminal determines at least one channel and/or at least one signal applicable to the first TCI state indicated by the indication field based on the indication field sent by the access network device.

**At 403,** the terminal determines at least one channel and/or at least one signal applicable to the first QCL indicated by the indication field based on the indication field sent by the access network device.

The at least one channel includes at least one of a PDCCH, a PDSCH, a PUCCH, and a PUSCH.

The at least one signal includes at least one of a DMRS, a CSI-RS, and a SRS.

In summary, in the communication method according to the present disclosure, based on the indication field contained in the first control information carried in the PDCCH on the first CORESET, the applicable situations of each channel and each signal corresponding to the first TCI state and/or the first QCL indicated by the indication field are determined, which thus reduces the signal overhead during the indication process of the TCI state and improves the beam transmission performance.

FIG. 5 is a block diagram of a communication apparatus according to an example embodiment of the present disclosure, and the communication apparatus is applied to a terminal. As shown in FIG 5, the apparatus includes a receiving module 510 and a determination module 520.

The receiving module 510 is configured to receive first control information carried in a PDCCH on a first CORESET, in which the first control information includes an indication field for indicating a first TCI state and/or a first QCL.

The determination module 520 is configured to determine at least one channel and/or at least one signal applicable to the first TCI state indicated by the indication field; and/or, determine at least one channel and/or at least one signal applicable to the first QCL indicated by the indication field.

In an optional embodiment, the at least one channel includes a first PDCCH corresponding to a second CORESET.

In an optional embodiment, the second CORESET includes a USS set and/or a CSS set Type 3; and the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; and the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the receiving module 510 is further configured to receive a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the receiving module 510 is further configured receive a configuration signaling for configuring the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is different from the first TCI state; and/or, a QCL of the first PDCCH is different from the first QCL.

In an optional embodiment, the receiving module 510 is further configured to receive a configuration signaling for configuring the second CORESET not to use a specific TCI state.

In an optional embodiment, the terminal does not receive a configuration signaling for determining whether the second CORESET uses a specific TCI state.

In an optional embodiment, the receiving module 510 is further configured to receive a second TCI state and/or a second QCL activated by a MAC CE for the second CORESET; in which, a TCI state of the first PDCCH is the same as the second TCI state; and/or, a QCL of the first PDCCH is the same as the second QCL.

In an optional embodiment, the at least one channel includes a second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET pool index as the third CORESET; a TCI state of the second PDCCH is the same as the first TCI state; and/or, a QCL of the second PDCCH is the same as the first QCL.

In an optional embodiment, the receiving module 510 is further configured to receive a configuration signaling for configuring the third CORESET and/or the first SS set to use a specific TCI state.

In an optional embodiment, the first SS set comprises any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the receiving module 510 is further configured to receive a configuration signaling for configuring the third CORESET and/or the first SS set not to use a specific TCI state.

In an optional embodiment, the terminal does not receive a configuration signaling for determining whether the third CORESET and/or the first SS set uses a specific TCI state.

In an optional embodiment, the receiving module 510 is further configured to receive a third TCI state activated by the MAC CE for the third CORESET and/or the first SS set; and/or, receive a third QCL activated by the MAC CE for the third CORESET and/or the first SS set; and determine that a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with the CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a PDSCH, a PUCCH, and a PUSCH.

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the receiving module 510 is further configured to receive configuration information for RRC and/or MAC CE, in which the configuration information for RRC and/or MAC CE indicates whether the at least one channel uses a specific TCI state; in which, the at least one channel is not scheduled by a DCI signaling.

In an optional embodiment, the configuration information for RRC and/or MAC CE indicates that the at least one channel uses the specific TCI state; and a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; and a TCI state of the at least one channel is different from the first TCI state; and/or, a QCL of the at least one channel is different from the first QCL.

In an optional embodiment, the receiving module 510 is further configured to receive a fourth TCI state and/or a fourth QCL configured for the at least one channel by the RRC and/or MAC CE; in which, a TCI state of the at least one channel is the same as the fourth TCI state; and/or, a QCL of the at least one channel is the same as the fourth QCL.

In an optional embodiment, the at least one signal includes at least one of a CSI-RS and a SRS.

In an optional embodiment, a TCI state of a SS set and/or a CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; and a TCI state of the at least one signal is the same as the first TCI state; and/or, a QCL of the at least one signal is the same as the first QCL.

In an optional embodiment, the receiving module 510 is further configured to receive configuration information for RRC and/or MAC CE, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the receiving module 510 is further configured to receive a fifth TCI state and/or a fifth QCL configured for the at least one signal by the RRC and/or MAC CE; in which, a TCI state of the at least one signal is the same as the fifth TCI state; and/or, a QCL of the at least one signal is the same as the fifth QCL.

FIG. 6 is a block diagram of a communication apparatus according to another example embodiment of the present disclosure, and the communication apparatus is applied to an access network device. As shown in FIG 6, the apparatus includes a sending module 610.

a sending module 610 for sending first control information carried in a PDCCH to a terminal through a first CORESET, in which the first control information includes an indication field for indicating a first TCI state and/or a first QCL; and in which the indication field indicates at least one channel and/or at least one signal applicable to the first TCI state; and/or, the indication field indicates at least one channel and/or at least one signal applicable to the first QCL.

In an optional embodiment, the at least one channel includes a first PDCCH corresponding to a second CORESET.

In an optional embodiment, the second CORESET includes a USS set and/or a CSS set Type 3; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the second CORESET includes any CSS set; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the sending module 610 is further configured to send a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is the same as the first TCI state; and/or, a QCL of the first PDCCH is the same as the first QCL.

In an optional embodiment, the sending module 610 is further configured to send a configuration signaling to the terminal, in which the configuration signaling configures the second CORESET to use a specific TCI state.

In an optional embodiment, the second CORESET includes a USS set and a CSS set, or the second CORESET includes an initial CORESET; the first CORESET corresponds to a same CORESET pool index as the second CORESET; and a TCI state of the first PDCCH is different from the first TCI state; and/or, a QCL of the first PDCCH is different from the first QCL.

In an optional embodiment, the sending module 610 is further configured to send a configuration signaling to the terminal, in which the configuration signaling configures the second CORESET not to use a specific TCI state.

In an optional embodiment, the access network device does not send a configuration signaling to the terminal, in which the configuration signaling is configured to determine whether the second CORESET uses a specific TCI state.

In an optional embodiment, the sending module is further configured to send a MAC CE to the terminal, in which the MAC CE is configured to activate a second TCI state and/or a second QCL for the second CORESET; in which, a TCI state of the first PDCCH is the same as the second TCI state; and/or, a QCL of the first PDCCH is the same as the second QCL.

In an optional embodiment, the at least one channel includes a second PDCCH, the second PDCCH corresponding to a first SS set and a third CORESET.

In an optional embodiment, the first SS set includes a USS set and/or a CSS set Type 3; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the first SS set includes any CSS set; the first CORESET corresponds to a same CORESET pool index as the third CORESET; and a TCI state of the second PDCCH is the same as the first TCI state; and/or, a QCL of the second PDCCH is the same as the first QCL.

In an optional embodiment, the sending module 610 is further configured to send a configuration signaling to the terminal, in which the configuration signaling configures the third CORESET and/or the first SS set to use a specific TCI state.

In an optional embodiment, the first SS set includes any CSS set; the first CORESET corresponds to a same CORESET pool index as the third CORESET; and a TCI state of the second PDCCH is different from the first TCI state; and/or, a QCL of the second PDCCH is different from the first QCL.

In an optional embodiment, the sending module 610 is further configured to send a configuration signaling to the terminal, in which the configuration signaling configures the third CORESET and/or the first SS set not to use a specific TCI state.

In an optional embodiment, the access network device does not send a configuration signaling to the terminal, in which the configuration signaling is configured to determine whether the third CORESET and/or the first SS set uses a specific TCI state.

In an optional embodiment, the sending module 610 is further configured to send a MAC CE to the terminal, in which the MAC CE is configured to activate a third TCI state for the third CORESET and/or the first SS set; and/or, send a MAC CE to the terminal, in which the MAC CE is configured to activate a third QCL for the third CORESET and/or the first SS set; and in which a TCI state of the second PDCCH is the same as the third TCI state; and/or, a QCL of the second PDCCH is the same as the third QCL.

In an optional embodiment, in case that the first CORESET and the second CORESET are not configured with a CORESET pool index, the first CORESET corresponds to the same CORESET pool index as the second CORESET; or, the CORESET pool indexes configured for the first CORESET and the second CORESET are equal to a first value, and the first CORESET corresponds to the same CORESET pool index as the second CORESET; or, the CORESET pool indexes configured for the first CORESET and the second CORESET are equal to a second value, and the first CORESET corresponds to the same CORESET pool index as the second CORESET.

In an optional embodiment, in case that the first CORESET and the third CORESET are not configured with a CORESET pool index, the first CORESET corresponds to the same CORESET pool index as the third CORESET; or, the CORESET pool indexes configured for the first CORESET and the third CORESET are equal to a first value, and the first CORESET corresponds to the same CORESET pool index as the third CORESET; or the CORESET pool indexes configured for the first CORESET and the third CORESET are equal to a second value, and the first CORESET corresponds to the same CORESET pool index as the third CORESET.

In an optional embodiment, the at least one channel includes at least one of a PDSCH, a PUCCH, and a PUSCH.

In an optional embodiment, a TCI state of a SS set and/or a CORESET corresponding to the PDCCH for scheduling the at least one channel is the same as the first TCI state; and/or, a QCL of a SS set and/or a CORESET corresponding to the PDCCH for scheduling the at least one channel is the same as the first QCL; and a TCI state of the at least one channel is the same as the first TCI state; and/or, a QCL of the at least one channel is the same as the first QCL.

In an optional embodiment, the sending module 610 is further configured to send configuration information for RRC and/or MAC CE to the terminal, in which the configuration information for RRC and/or MAC CE indicates whether the at least one channel uses a specific TCI state; in which, the at least one channel is not scheduled by a DCI signaling.

In an optional embodiment, the configuration information for RRC and/or MAC CE indicates that the at least one channel uses the specific TCI state; and a TCI state of the at least one channel is the same as the first TCI state; and/or, a QCL of the at least one channel is the same as the first QCL.

In an optional embodiment, the configuration information for RRC and/or MAC CE indicates that the at least one channel does not use the specific TCI state; and a TCI state of the at least one channel is different from the first TCI state; and/or, a QCL of the at least one channel is different from the first QCL.

In an optional embodiment, the sending module 610 is further configured to send the RRC and/or MAC CE to the terminal, in which the RRC and/or MAC CE configures a fourth TCI state and/or a fourth QCL for the at least one channel; in which, a TCI state of the at least one channel is the same as the fourth TCI state; and/or, a QCL of the at least one channel is the same as the fourth QCL.

In an optional embodiment, the at least one signal includes at least one of a CSI-RS and a SRS.

In an optional embodiment, a TCI state of a SS set and/or a CORESET corresponding to the PDCCH for scheduling the at least one signal is the same as the first TCI state; and/or, a QCL of a SS set and/or a CORESET corresponding to the PDCCH for scheduling the at least one signal is the same as the first QCL; a TCI state of the at least one signal is the same as the first TCI state; and/or, a QCL of the at least one signal is the same as the first QCL.

In an optional embodiment, the sending module 610 is further configured to send configuration information for RRC and/or MAC CE to the terminal, in which the configuration information for RRC and/or MAC CE indicates whether the at least one signal uses a specific TCI state; in which, the at least one signal is not scheduled by a DCI signaling.

In an optional embodiment, the configuration information for RRC and/or MAC CE indicates that the at least one signal uses the specific TCI state; and a TCI state of the at least one signal is the same as the first TCI state; and/or, a QCL of the at least one signal is the same as the first QCL.

In an optional embodiment, the configuration information for RRC and/or MAC CE indicates that the at least one signal does not use the specific TCI state; and a TCI state of the at least one signal is different from the first TCI state; and/or, a QCL of the at least one signal is different from the first QCL.

In an optional embodiment, the sending module 610 is further configured to send the RRC and/or MAC CE to the terminal, in which the RRC and/or MAC CE configures a fifth TCI state and/or a fifth QCL for the at least one signal; and a TCI state of the at least one signal is the same as the fifth TCI state; and/or, a QCL of the at least one signal is the same as the fifth QCL.

In summary, in the communication apparatus according to the present disclosure, based on the indication field contained in the first control information carried in the PDCCH on the first CORESET, the applicable situations of each channel and each signal corresponding to the first TCI state and/or the first QCL indicated by the indication field are determined, which thus reduces the signal overhead during the indication process of the TCI state and improves the beam transmission performance.

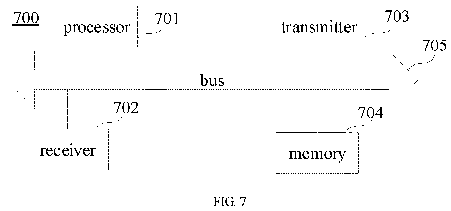

FIG 7 illustrates a structural diagram of a communication device 700 (a terminal device or an access network device) according to an example embodiment of the present disclosure, in which the communication device 700 includes a processor 701, a receiver 702, a transmitter 703, a memory 704, and a bus 705.

The processor 701 includes one or more processing cores, and the processor 701 executes various functional applications and an information processing by running a software program and a module.

The receiver 702 and the transmitter 703 may be implemented as a communication component, which may be a communication chip.

The memory 704 is connected to the processor 701 through the bus 705.

The memory 704 may be configured to store at least one instruction, and the processor 701 is configured to execute the at least one instruction to implement the various steps in the above method embodiments.

In addition, the memory 704 may be implemented by any type of volatile or non-volatile storage device or their combination, in which the volatile or non-volatile storage device includes but not limited to: a magnetic or an optical disks, an erasable programmable read only memory (EEPROM), an erasable programmable read only memory (EPROM), a static random access memory (SRAM), a read-only memory (ROM), a magnetic storage, a flash memory, a programmable read-only memory (PROM).

An example embodiment of the present disclosure also provides a state indication system, in which the system includes: a terminal device and an access network device; the terminal device includes the communication apparatus provided by the embodiment shown in FIG 5; and the access network device includes the communication apparatus provided in the embodiment shown in FIG 6.

An example embodiment of the present disclosure also provides a computer-readable storage medium, which stores at least one instruction, and at least one program, code set, or instruction set. The at least one instruction, and the at least one program, the code set, or the instruction set are loaded and executed by the processor to implement the steps executed by the terminal in the communication method according to the various method embodiments described above.

An example embodiment of the present disclosure also provides a computer program product, including a computer program or an instruction that, when executed by a processor, implement the steps executed by the terminal in the communication methods according to the various method embodiments.

It may be understood that the term "a plurality of" mentioned in this article refers to two or more. "and/or" describes an association relationship between related objects, indicating that there may be three types of relationships, for example, A and/or B, which may represent: A exists alone, A and B exist simultaneously, and B exists alone. The symbol "/" generally indicates that the associated objects are in an "or" relationship.

Other embodiments of the present disclosure will be easily envisaged for those skilled in the art after considering the specification and practicing the present disclosure disclosed herein. This disclosure is intended to cover any variations, uses or adaptations of the present disclosure, which follow the general principles of the present disclosure and include common knowledge or conventional technical means in this technical field that are not disclosed in the present disclosure. The specification and embodiments are only considered explanatory, and the true scope and spirit of the present disclosure are indicated by the following claims.

It should be understood that the present disclosure is not limited to the precise structures described above and shown in the drawings, and various modifications and changes may be made without departing from its scope. The scope of the present disclosure is limited only by the scope of the appended claims.

## Claims

1. A communication method, performed by a terminal device, the method comprising:
receiving first control information carried in a physical downlink control channel (PDCCH) on a first control resource set (CORESET), wherein the first control information comprises an indication field for indicating a first transmission configuration indication (TCI) state and/or a first quasi co location (QCL); and
determining at least one channel and/or at least one signal applicable to the first TCI state indicated by the indication field; and/or, determining at least one channel and/or at least one signal applicable to the first QCL indicated by the indication field.

2. The method of claim 1, wherein the at least one channel comprises a first PDCCH corresponding to a second CORESET.

3. The method of claim 2, wherein the second CORESET comprises a user equipment specific search space set and/or a common search space set type 3; the first CORESET corresponds to a same control resource set pool index as the second CORESET; and
a TCI state of the first PDCCH is the same as the first TCI state; and/or, a QCL of the first PDCCH is the same as the first QCL.

4. The method of claim 2, wherein the second CORESET comprises any common search space set; the first CORESET corresponds to a same control resource set pool index as the second CORESET; and
a TCI state of the first PDCCH is the same as the first TCI state; and/or, a QCL of the first PDCCH is the same as the first QCL.

5. The method of claim 4, further comprising:
receiving, by the terminal, a configuration signaling for configuring the second CORESET to use a specific TCI state.

6. The method of claim 2, wherein the second CORESET comprises a user equipment specific search space set and a common search space set, or the second CORESET comprises an initial CORESET;
the first CORESET corresponds to a same control resource set pool index as the second CORESET; and
a TCI state of the first PDCCH is the same as the first TCI state; and/or, a QCL of the first PDCCH is the same as the first QCL.

7. The method of claim 6, further comprising:
receiving a configuration signaling for configuring the second CORESET to use a specific TCI state.

8. The method of claim 2, wherein the second CORESET comprises a user equipment specific search space set and a common search space set, or the second CORESET comprises an initial CORESET;
the first CORESET corresponds to a same control resource set pool index as the second CORESET; and
a TCI state of the first PDCCH is different from the first TCI state; and/or, a QCL of the first PDCCH is different from the first QCL.

9. The method of claim 8, further comprising:
receiving, by the terminal, a configuration signaling for configuring the second CORESET not to use a specific TCI state.

10. The method of claim 8, further comprising:
failing, by the terminal, to receive a configuration signaling for determining whether the second CORESET uses a specific TCI state.

11. A communication method, performed by an access network device, the method comprising:
sending first control information carried in a physical downlink control channel (PDCCH) to a terminal through a first control resource set (CORESET), wherein the first control information comprises an indication field, and the indication field indicates a first transmission configuration indication (TCI) state and/or a first quasi co location (QCL); and
wherein the indication field indicates at least one channel and/or at least one signal applicable to the first TCI state; and/or, the indication field indicates at least one channel and/or at least one signal applicable to the first QCL.

12. The method of claim 11, wherein the at least one channel comprises a first PDCCH corresponding to a second CORESET.

13. The method of claim 12, wherein the second CORESET comprises a user equipment specific search space set and/or a common search space set type 3; the first CORESET corresponds to a same control resource set pool index as the second CORESET; and
a TCI state of the first PDCCH is the same as the first TCI state; and/or, a QCL of the first PDCCH is the same as the first QCL.

14. The method of claim 12, wherein the second CORESET comprises any common search space set; the first CORESET corresponds to a same control resource set pool index as the second CORESET; and
a TCI state of the first PDCCH is the same as the first TCI state; and/or, a QCL of the first PDCCH is the same as the first QCL.

15. The method of claim 14, further comprising:
sending a configuration signaling to the terminal, wherein the configuration signaling configures the second CORESET to use a specific TCI state.

16. The method of claim 12, wherein the second CORESET comprises a user equipment specific search space set and a common search space set, or the second CORESET comprises an initial CORESET;
the first CORESET corresponds to a same control resource set pool index as the second CORESET; and
a TCI state of the first PDCCH is the same as the first TCI state; and/or, a QCL of the first PDCCH is the same as the first QCL.

17. The method of claim 16, further comprising:
sending a configuration signaling to the terminal, wherein the configuration signaling configures the second CORESET to use a specific TCI state.

18. The method of claim 12, wherein the second CORESET comprises a user equipment specific search space set and a common search space set, or the second CORESET comprises an initial CORESET;
the first CORESET corresponds to a same control resource set pool index as the second CORESET; and
a TCI state of the first PDCCH is different from the first TCI state; and/or, a QCL of the first PDCCH is different from the first QCL.

19. The method of claim 18, further comprising:
sending a configuration signaling to the terminal, wherein the configuration signaling configures the second CORESET not to use a specific TCI state.

20. The method of claim 18, wherein the access network device does not send a configuration signaling to the terminal, and the configuration signaling is configured to determine whether the second CORESET uses a specific TCI state.

21. A communication apparatus, comprising:
a receiving module, configured to receive first control information carried in a physical downlink control channel (PDCCH) on a first control resource set (CORESET), wherein the first control information comprises an indication field for indicating a first transmission configuration indication (TCI) state and/or a first quasi co location (QCL); and
a determination module, configured to determine at least one channel and/or at least one signal applicable to the first TCI state indicated by the indication field; and/or, determine at least one channel and/or at least one signal applicable to the first QCL indicated by the indication field

22. A communication apparatus, comprising:
a sending module, configured to send first control information carried in a physical downlink control channel (PDCCH) to a terminal through a first control resource set (CORESET), wherein the first control information comprises an indication field for indicating a first transmission configuration indication (TCI) state and/or a first quasi co location (QCL); and
wherein the indication field indicates at least one channel and/or at least one signal applicable to the first TCI state; and/or, the indication field indicates at least one channel and/or at least one signal applicable to the first QCL.

23. A terminal, comprising:
a processor; and
a transceiver connected to the processor;
wherein, the processor is configured to load and execute an executable instruction to implement the communication method according to any one of claims 1 to 10.

24. An access network device, comprising:
a processor; and
a transceiver connected to the processor;
wherein, the processor is configured to load and execute an executable instruction to implement the communication method according to any one of claims 11 to 20.

25. A computer-readable storage medium storing at least one instruction, and at least one program, code set, or instruction set which, when loaded and executed by a processor, implement the communication method according to any one of claims 1 to 20.
